# EUROPEAN PATENT APPLICATION

(11) **EP 2 015 305 A1**
(43) Date of publication of application: **14.01.2009**
(21) Application number: 07290879.1
(22) Date of filing: 12.07.2007
(51) Int. Cl.: G11B 27/00, G11B 27/30, G11B 27/10, G11B 27/031, H04N 7/24, H04N 9/804

(54) **A device and method for smooth reverse playback of media**

(71) Applicant: Alcatel Lucent, 75008 Paris (FR)
(72) Inventor: Kisel, Andrey, Berkshire SL6 8DH (GB); Robinson, David, Aldbourne, Wiltshire SN8 2NP (GB)
(74) Representative: Plas, Axel Ivo Michel

(57) **Abstract**

The present invention relates to a device (201) for streaming media which enables reverse playback of the media. The media consists of groups of frames that are timestamped with presentation timestamps (PTS) indicative for the display order of the frames. The device (201) reverse timestamps (202) all frames within each group of frames and streams (204) the groups in reverse order.

## Description

### Field of the Invention

The present invention generally relates to streaming media items and more in particular to streaming video items for reverse playback.

### Background of the Invention

Media for playback is generally stored in a number of subsequent parts or frames. Each frame can consist of an entire image or may contain enough information to construct an image in combination with information from one or more different frames. Raw video data will typically consist of frames making up an entire image as this results in the highest image quality. Playback of raw data is a simple process of presenting each of the frames sequentially. However, high quality images require a lot of storage space on a storage medium. A lot of storage space is a problem for user comfort and may become costly. A high storage requirement can lead to a need for changing the storage medium during playback. This means that the experience is interrupted for the user. Large storage requirements also mean that a user can only keep a limited number of media items such as movies before there is a need to expand the storage capacity which costs additional investments. The storage may be located at a user, for instance on a computer hard disc, a compact disc (CD), Digital Versatile Disc (DVD) or other electric, magnetic or optical storage medium. However the storage may also be located in a network such as an Internet Protocol Television (IPTV) network or other remote location to the user. In such cases, the media items have to be delivered to the user's location for playback which requires enough bandwidth to transmit the media item. Because bandwidth is not abundant, it is not feasible to transmit raw data over networks.

Therefore, media items are often stored in a compressed format. This compression leads to the reduction of size by reducing the amount of information that is stored for each frame. For example, consider two types of frames, where the first frame contains a complete picture and the second type contains changes relative to the first frame instead of the entire picture. The second type of frame requires less data space to be stored and less bandwidth for transmission. A typical example of video compression is described by the Moving Picture Experts Group in the MPEG1 specification. This specification described three types of frames: key frames (I-frames), forward prediction frames (P-frames) and bidirectional prediction frames (B-frames). A key frame contains the most information related to an image and does not rely on information of other frames. An MPEG decoder can decode an I frame for display to a user without additional requirements. The P-frames are made up out of an incremental difference from the previous I-frame. An MPEG decoder needs information related to that I-frame and the P-frame to decode and display the image. At last, the B-frame is made up out of a difference from the preceding I-frame and the following P-frame. A B-frame can be decoded by an MPEG decoder with knowledge about the preceding I-frame or P-frame and is thus dependant on the presence of such frame before decoding. MPEG frames are generally stored in groups starting with an I-frame, followed by one or more B-frames and finally a P-frame. This means that each group can individually be decoded and presented as a number of subsequent images to a user. Such groups are called "Group of Pictures" (GOP).

MPEG is used in streaming media such as Media-on-Demand services in IPTV networks. This means that a user has to receive a number of frames before anything can be decoded and presented to the user on for instance a television set. The frames are sent in their GOP in decoding order which differs from display order. First, the I-frame for the GOP is sent because this frame can be decoded without any knowledge of other frames. Next, the P-frame is transmitted as this frame can be decoded with knowledge of the I-frame. Finally, the B-frames of the GOP are transmitted to the decoder. As an example consider a GOP wherein the display order of the frames is "I B₁ B₂ P", the transmission order will be "I P B₁ B₂". This way, a decoder can decode the I-frame, then the P-frame based thereon and finally the B-frames depending on the I and P frame for playback. The order of playback, which is different from the streaming/receiving order is indicated by a presentation timestamp. A decoder is thus able to decode the frames and order them for presentation based on the timestamp provided for each frame. In the above example, the I-frame has a presentation timestamp value of 1, the P-frame has a timestamp value of 4, B₁ has a timestamp value of 2 and B₂ has a timestamp value of 3.

This works well for forward playback which is the normal use of media streaming. However, in some cases a reverse playback may be desired. For instance in case where a user missed a part of a movie and wants to return to the last part he has seen. Reverse playback makes it a lot easier to find that part of the movie.

Obviously, reverse playback by streaming the frames in reverse order is not efficient from decoding point of view: receiving a P-frame before the corresponding I-frame means that the P-frame cannot be decoded immediately upon receipt. The decoder would have to be adapted to store frames and would have to detect when sufficient information is received to start decoding frames. This would require modifications to existing equipment with MPEG decoders to support reverse playback.

A possible, straightforward solution for streaming media to enable reverse playback of the media at decoder side would consist in sending the I-frames in reverse order and freezing the image between two I-frames. Thus, P and B frames would not be streamed which would turn the reverse playback in a sort of slideshow of I-frames in reverse order. Although reverse playback is achieved thereby, such straightforward solution would definitely make it harder for a user to find a particular point in the media stream, especially if a large number of frames are normally decoded between two I-frames.

It is an objective of the present invention to provide a streaming device that enables smooth reverse playback of media at the decoder's side. It is another objective of the present invention to enable smooth reverse playback of media without modification to existing decoder equipment since this would require all users to replace their decoder devices with new equipment.

### Summary of the Invention

The objectives of the present invention are realized and the drawbacks of the prior art solutions are overcome with a device for streaming media to enable reverse playback thereof, the media comprising groups of frames, the device comprising timestamp means for timestamping frames with presentation timestamps indicative for the display order of the frames, characterized in that the timestamp means are adapted to reverse timestamp all frames within each group of frames and in that the device further comprises means for streaming the groups in reverse order.

Indeed, by streaming the groups in reverse order and timestamping all frames in each group in reverse order, all the frames can be decoded and displayed in reverse order. Streaming the groups in reverse order means that the decoder receives the group of pictures related to the last images to be presented first from the transmitter. The decoder can then start decoding the group of pictures, and use the presentation timestamps to determine the order wherein the frames or images are presented to the user. Thanks to the timestamping in reverse order the last frame or image in case of regular playout is now presented first, the one but last frame or image in case of regular playout is now presented as the second image, and so forth.

Since all frames are timestamped and streamed as part of their respective groups there is no longer a frozen image during the reverse playback or the length of the frozen image can be reduced significantly by decoding more frames from each group. If the timestamping were not reversed, the images in a single group would be decoded from the frames for forward playback. This would result in a number of images moving forward and then a discontinuous shift backward to a previous, situation which is decoded from the next group of pictures (i.e. the previous group of pictures in case of regular playout). This would be confusing for the users and would definitely not constitute a smooth reverse playback. Thus a combination of reverse streaming of groups and reverse timestamping of the frames within a group is needed to provide the smooth reverse playback of the media items.

Optionally, the means for streaming the groups in the device according to the present invention may be adapted to stream frames within a single group in decoding order.

This way, existing decoder equipment does not have to be replaced. Such a decoder is able to decode the frames in a group of pictures as soon as sufficient information is received. In case of MPEG I, P and B frames, a decoder can decode the I frame immediately, a P frame once the I frame is received and/or decoded, then the B frames. Thus, by transmitting the frames in that order, a decoder can also in the case of reverse playback immediately decode frames upon arrival. This means that there is no need for delays between receiving frames and decoding the frames. The decoding order of these frames is the same for forward and reverse playback and as such does not require any modifications of the decoder equipment. The advantage is thus that existing equipment automatically is able to display a smooth reverse playback of streaming media.

Optionally, according to the present invention each group of frames comprises one or more of the following:
- a key frame;
- a forward predicted frame; and
- a bi-directional predicted frame.

The use of different types of frames is already known to reduce the amount of storage space or bandwidth during streaming. Key frames enable a decoder to pick up a media stream at frequent intervals, for instance every 12^{th} frame may be a key frame. Providing a key frame to the decoder provides a base to decode subsequent frames which depend on the key frame such as the forward predicted frame. Similarly, the forward predicted frame and the key frame enable the decoding of the bi-directional predicted frame.

Optionally, the device for streaming media according to the present invention may be adapted to be integrated in an Internet Protocol Television (IPTV) network.

IPTV networks are important platforms to provide streaming media to a large user-base. Media can be streamed from various sources, such as live broadcasts, media-on-demand, time-shift television, etc. Generally these streams are used for forward media playback. However, at various times a reverse playback may be desired. For instance a replay of an action during a sports game can be played forward and backward to illustrate important parts to the general public. It also allows a user to rewind a media stream to a particular point such as the point where a user had to walk away from his television set. Alternatively, the current invention may be used in audio or other media streaming applications.

Optionally, according to the present invention the frames are Moving Picture Experts Group or MPEG frames, the key frame is an I-frame, the forward predicted frame is a P-frame and the bi-directional predicted frame is a B-frame.

An I-frame can be decoded in a single image independently. Once this image is decoded, a P-frame can be used to decode a different image, which in turn can be used to decode a B-frame. Thus a group of pictures made up out of such frames can be decoded into a set of images which can in turn be presented to a user. The advantage of using MPEG frames is that MPEG is already widely used as compression technique for media items and more in particular video items. Thus, applying the present invention to MPEG based systems extends their functionality with a smooth reverse media playback without a lot of effort or modifications to the user's equipment or the provider's equipment in case of streaming media. Obviously, application of the current invention is not restricted to any particular media encoding technology such as MPEG. Whenever the streamed data are packed in groups of frames, the frames representing data units and the groups representing entities that can be decoded independently, the current invention can be applied with similar advantages as described above.

Optionally, according to the present invention the means for streaming are adapted to stream periodically selected groups of frames out of the media in reverse order.

The media streaming involves the transmission of various groups of pictures sequentially. If not each group is streamed but one out of every N groups is transmitted, the reverse playback will run faster. Of course, this effect can be noticed by a user as a jump in the images because a series of frames is not decoded or shown to the user. However, this means that a user can for instance request a fast rewind to move the stream near a position and then use normal reverse playback to find a specific point in the media stream.

The present invention further relates to a method for streaming media enabling reverse playback thereof, the media comprising groups of frames, the method comprises the step of timestamping frames with presentation timestamps indicative for the display order of the frames, and the method further comprises reverse timestamping all frames within each group of frames and streaming the groups in reverse order.

### Brief Description of the Drawings

Fig. 1a to 1d illustrate a set of frames and their presentation timestamps PTS for forward and reverse media streaming as generated by a device according to the present invention; and
Fig. 2 illustrates an embodiment of the device 201 according to the present invention.

### Detailed Description of Embodiment(s)

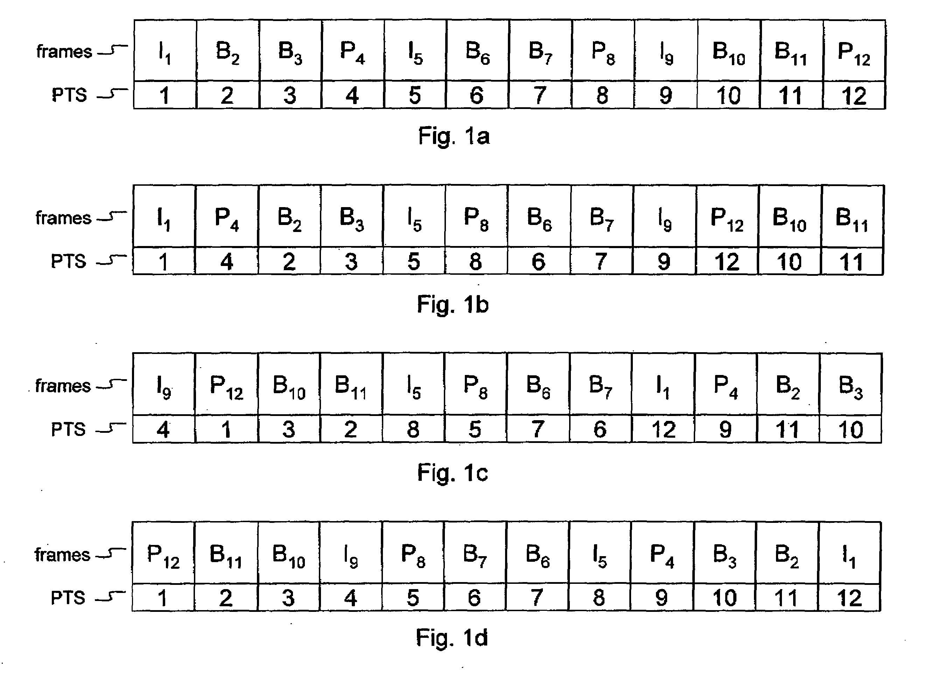

Fig. 1a shows a number of video frames and the presentation timestamp (PST) for each of these frames. Fig. 1a shows the frames in their normal presentation order for forward media playback, i.e. the order wherein the images corresponding to the frames are displayed during regular playback, typically the order wherein the images are recorded. The frames constitute three groups of pictures (GOP), each consisting of an I-frame, two B-frames and a P-frame. In this example, GOP₁ consists of I₁, B₂, B₃ and P₄ with respective presentation timestamps 1, 2, 3 and 4; GOP2 consists of I₅, B₆, B₇ and P₈ with respective presentation timestamps 5, 6, 7 and 8; and GOP3 consists of I₉, B₁₀, B₁₁ and P₁₂ with respective timestamps 9, 10, 11 and 12.

Fig. 1b illustrates the transmission or streaming order of the frames in the three groups of pictures of Fig. 1a for forward media playback, assuming that MPEG video encoding is used. Within each group of pictures, the I frame is sent first, followed by the P frame, the first B frame and the second B frame. Thus, the frames I₁, P₄, B₂ and B₃ of GOP1 are streamed first, followed by the frames I₅, P₈, B₆ and B₇ of GOP2 and frames I₉, P₁₂, B₁₀ and B₁₁ of GOP3. The presentation timestamp in Fig. 1b corresponds for each frame to the presentation timestamp in Fig. 1a and will enable the decoder or video playback device, upon receipt and decoding of the stream drawn in Fig. 1b, to re-sequence the frames into the proper order for forward playback.
Fig. 1c illustrates the GOPs of Fig. 1a and Fig. 1b as transmitted or streamed according to the present invention to enable reverse media playback. In this case, the order of streaming the GOPs is reversed i.e. GOP₃ is transmitted or streamed before GOP₂ which is transmitted or streamed before GOP₁. Fig. 1b and Fig. 1c further demonstrate that the relative streaming order of the frames within a particular GOP, e.g. the order of the frames I₅, P₈, B₆ and B₇ of GOP2 is the same for forward and reverse media playback. Furthermore, Fig. 1c shows that the PTS is reversed for reverse media playback, within each GOP and overall. For instance, GOP₃ is transmitted first and as such its frames I₉, P₁₂, B₁₀ and B₁₁ have the PTS 4, 1, 3 and 2 respectively instead of 9, 12, 10 and 11 in the stream enabling forward playback. Within GOP₃ the timestamps are also reversed, P₁₂ now has the lowest timestamp instead of I₉ and thus P₁₂ is shown first.

Lastly, Fig. 1d illustrates the display order of the frames for reverse playback. Each group of pictures is shown from P-frame to I-frame, from the last group to the first group. This is possible because of the reverse receiving order of the GOPs and the reverse timestamping of the frames within the GOPs. The images can be decoded from the corresponding frames in the order they are received and the frames or corresponding images can be reordered according to their PTS after decoding an entire group. This works both ways, for forward and reverse playback.

It should be noted that in this particular example, a GOP consists of 4 frames. However, a GOP may consists of more than 4 frames, for instance a GOP may consist of 10 frames and be made up IBBPBBPBBP. A GOP may also consist of more then two B frames between an I and a P or between two P frames, for instance IBBBBP. It should also be noted that the I, P and B frames are related to MPEG encoding of media. Of course other encoding techniques may also be used to stream media, and other types of frames may also be used. For instance an encoding technique wherein only key frames and forward predicted frames are used may apply the same principles of grouping the frames, transmitting the groups in reverse order and presenting the decoded images in reverse order.

Another remark is that the presentation timestamps may be reversed overall as is the case in the above described example, but alternatively also may be reversed per group, if it is assumed that the order of the groups cannot change during transmission or streaming. In other words, when the order of arrival of groups at the decoder for sure corresponds to the order of transmission of the groups at the encoder, one may rely on timestamps ranging from 1 to 4 for each group. In order to stream such frames to enable reverse playback in line with the current invention, it is sufficient to reverse the timestamps within each group, and no overall reversing of the timestamps must be applied.

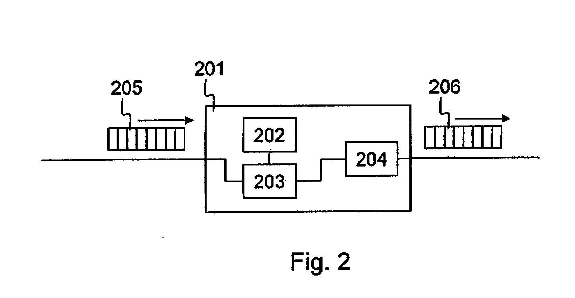

Figure 2 illustrate an embodiment of the device 201 according to the present invention. The device 201 comprises a timestamp module 202, a group order module 203 and a streaming module 204. A series of groups of pictures 205 is received by the device 201 for reverse playback. The device 201 sends these groups of pictures through the group order module 203 to rearrange the order of the groups in reverse order. The timestamp module 202 will generate the presentation timestamp for each frame in the groups of pictures and inform the group order module 203 of the timestamp for each frame. The group order module 203 can then include the timestamp for each frame in the group of pictures. Once a group of pictures is ordered and the timestamps are set, streaming module 204 can transmit the processed group of pictures 206 towards a decoder.

It should be noted that although this particular example shows three individual modules, there can be more or fewer modules present in the device. For instance the group order module and the streaming module may be combined into a single module. Additionally, the grouping of frames may be part of the device or may be done by an external module before and/or after delivering the frames or groups to the device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order.

## Claims

1. A device (201) for streaming media to enable reverse playback thereof, said media comprising groups of frames, said device comprising timestamp means (202) for timestamping frames with presentation timestamps (PST) indicative for the display order of said frames,
**characterized in that**:
- said timestamp means (202) are adapted to reverse timestamp all frames within each group of frames; and **in that**
- said device further comprises means (204) for streaming said groups in reverse order.

2. The device (201) for streaming media as defined in claim 1,
**characterized in that** said means for streaming (204) said groups are adapted to stream frames within a single group in decoding order.

3. The device (201) for streaming media as defined in claim 1,
**characterized in that** each group of frames comprises one or more of the following:
- a key frame;
- a forward predicted frame; and
- a bi-directional predicted frame.

4. The device (201) for streaming media according to claim 1,
**characterized in that** said device (201) is adapted to be integrated in an Internet Protocol Television (IPTV) network.

5. The device (201) for streaming media according to claim 3,
**characterized in that** said frames are Moving Picture Experts Group or MPEG frames, said key frame is an I-frame, said forward predicted frame is a P-frame and said bi-directional predicted frame is a B-frame.

6. The device (201) for streaming media according to claim 1,
**characterized in that** said means (204) for streaming are adapted to stream periodically selected groups of frames out of said media in reverse order.

7. A method for streaming media enabling reverse playback thereof, said media comprising groups of frames, said method comprising the step of timestamping frames with presentation timestamps indicative for the display order of said frames,
**characterized in that** said method further comprises:
- reverse timestamping all frames within each group of frames; and
- streaming said groups in reverse order.
